(19) **Europäisches Patentamt / European Patent Office / Office européen des brevets**

(11) **EP 2 258 472 A1**

(12) **EUROPEAN PATENT APPLICATION**
published in accordance with Art. 153(4) EPC

(43) Date of publication:
**08.12.2010 Bulletin 2010/49**

(21) Application number: **09722847.2**

(22) Date of filing: **19.02.2009**

(51) Int Cl.:
**B01J 21/18** [(2006.01)]    **H01M 4/88** [(2006.01)]
**H01M 4/90** [(2006.01)]

(86) International application number:
**PCT/JP2009/053464**

(87) International publication number:
**WO 2009/116369 (24.09.2009 Gazette 2009/39)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **21.03.2008 JP 2008073238**

(71) Applicant: **Sumitomo Chemical Company, Limited Tokyo 104-8260 (JP)**

(72) Inventor: **MAKI, Hajime**
**Tsukuba-shi**
**Ibaraki 305-0821 (JP)**

(74) Representative: **Hart-Davis, Jason et al**
**Cabinet Beau de Loménie**
**158, rue de l'Université**
**75340 Paris Cedex 07 (FR)**

(54) **ELECTRODE CATALYST AND PROCESS FOR PRODUCING THE ELECTRODE CATALYST**

(57) Disclosed are an electrode catalyst and a method for producing an electrode catalyst. The electrode catalyst is composed of: a metal compound comprising one or more metal elements selected from the group consisting of Groups 4A and 5A, and an oxygen atom; and a carbonaceous material covering at least part of the compound, wherein the electrode catalyst has a BET specific surface area of not less than 15 m$^2$/g and not more than 500 m$^2$/g and a carbon coverage of not less than 0.05 and not more than 0.5 as determined by the following equation (1):

$$\text{carbon coverage} = \text{carbon content (\% by mass)}/\text{BET specific surface area (m}^2/\text{g}) \quad (1).$$

The method for producing an electrode catalyst comprises calcining a mixed material comprising a first material provided below and a second material provided below under conditions where the second material can be converted to a carbonaceous material: the first material that is a metal compound composed of one or more metal elements selected from the group consisting of Groups 4A and 5A, and one or more non-metal elements selected from the group consisting of a hydrogen atom, a nitrogen atom, a chlorine atom, a carbon atom, a boron atom and an oxygen atom; the second material that is a carbonaceous material precursor.

**EP 2 258 472 A1**

**Description**

**Technical Field**

The present invention relates to an electrode catalyst and a method for producing the same.

**Background Art**

An electrode catalyst, which is a solid catalyst supported on an electrode, particularly on a surface portion of the electrode, is used for, for example, in addition to electrolysis of water and electrolysis of an organic substance, a fuel cell or the like. As for an electrode catalyst used in an acid electrolyte, a noble metal, particularly platinum is widely used since platinum is stable in the acid electrolyte even at a high electric potential.

However, platinum is expensive, and the amount of platinum as a resource is restricted. Therefore, an electrode catalyst which is comparatively inexpensive and comparatively resourceful is required.

Tungsten carbide is known as an electrode catalyst which is comparatively inexpensive and is usable in an acid electrolyte (Hiroshi Yoneyama et al., Electrochemistry, Vol.41, p.719, 1973). However, tungsten carbide has a problem of being dissolved when it is used at a high electric potential. An electrode catalyst made of zirconium dioxide is known as an electrode catalyst which is hardly dissolved when used at a high electric potential (Yan Liu et al., Electrochemical and Solid-State Letters, 8(8), 2005, A400-402). Since a current value capable of being extracted is small, zirconium dioxide cannot be sufficiently used as an electrode catalyst.

**Disclosure of the Invention**

The present inventor has conducted intensive research in order to develop a method capable of producing a high activity electrode catalyst which is usable in an acid electrolyte under a high electric potential and which is comparatively inexpensive and comparatively resourceful. As a result, the present invention has been completed.

The present invention provides a method for producing an electrode catalyst, the method comprising calcining a mixed material comprising a first material provided below and a second material provided below under conditions where the second material can be converted to a carbonaceous material:

the first material that is a metal compound composed of one or more metal elements selected from the group consisting of Groups 4A and 5A, and one or more non-metal elements selected from the group consisting of a hydrogen atom, a nitrogen atom, a chlorine atom, a carbon atom, a boron atom and an oxygen atom;
the second material that is a carbonaceous material precursor.

The present invention provides an electrode catalyst composed of:

a metal compound comprising one or more metal elements selected from the group consisting of Groups 4A and 5A, and an oxygen atom; and
a carbonaceous material covering at least part of the compound, wherein
the electrode catalyst has a BET specific surface area of not less than 15 $m^2$/g and not more than 500 $m^2$/g and a carbon coverage of not less than 0.05 and not more than 0.5 as described by the following equation (1):

$$\texttt{carbon coverage = carbon content (\% by mass)/BET}$$

$$\texttt{specific surface area (m}^2\texttt{/g) (1).}$$

**Modes for Carrying Out the Invention**

A first material used for the production method of the present invention is a metal compound composed of one or more metal elements selected from the group consisting of Groups 4A and 5A, and one or more non-metal elements selected from the group consisting of a hydrogen atom, a nitrogen atom, a chlorine atom, a carbon atom, a boron atom and an oxygen atom. The metal element in the metal compound of the first material is preferably the metal element of Group 4A or 5A, more preferably Ti, Zr, Ta or Nb, and still more preferably Zr. The non-metal elements in the metal compound are preferably one or more non-metal elements selected from a hydrogen element, a chlorine element and an oxygen atom. Particularly, examples of the metal compound when the metal element is Zr include one or more metal compounds selected from the group consisting of zirconium dioxide, zirconium hydroxide and zirconium oxychloride. As for zirconium dioxide, one that is partially stabilized by Y, Ce or the like can also be used.

A metal compound composed of a metal element of Group 4A or 5A and the non-metal element selected from the group consisting of a nitrogen atom, a carbon atom, a boron atom and an oxygen atom may be used as the first material.

In the case of the first material being composed of particles, it is preferable that the particle diameter of the first material be smaller, whereby the particle diameter of an electrode catalyst to be obtained is smaller and active sites as a catalyst are increased. Specifically, the particle diameter of the first material is preferably not more than 1 $\mu$m, more preferably not more than 0.5 $\mu$m, and particularly preferably not more than 0.2 $\mu$m. In the case of the first material being composed of particles, the BET specific surface area of the first material is preferably not less than 10 $m^2$/g and not more than 500 $m^2$/g, and more preferably not less than 50 $m^2$/g and not more than 300 $m^2$/g. The setting of the BET specific surface area in that way enables the obtained electrode catalyst to further enhance the activity thereof.

The first material is mixed with a second material to yield a mixed material. The second material, which is a carbonaceous material precursor, is led to a carbonaceous material by calcining. Examples of the carbonaceous material precursor include saccharides such as glucose, fructose, sucrose, cellulose and hydropropylcellulose; alcohols such as polyvinyl alcohol; glycols such as polyethylene glycol and polypropylene glycol; polyesters such as polyethylene terephthalate; nitriles such as acrylonitrile and polyacrylonitrile; various proteins such as collagen, keratin, ferritin, hormone, hemoglobin and albumin; biological materials such as amino acids, e.g., glycine, alanine and methionine; and organic acids such as ascorbic acid, citric acid and stearic acid. The carbonaceous material precursor is preferably a water-soluble one, and more preferably ascorbic acid, citric acid, stearic acid and the like, aqueous solutions of which show acidity when dissolved in water. As for the mixing method, the first material may be dry mixed with the second material, or the first material may be wet mixed with the second material. Preferably, the first material is wet mixed with the second material in order to further enhance the activity of the electrode catalyst to be obtained.

In the case of the wet mixing, as the post-process thereof, drying is preferably carried out in order to remove moisture contained. The drying can be performed without a specific problem as long as the drying temperature is a temperature at which the carbonaceous material precursor is not decomposed, and the drying temperature is usually not more than 100°C. The drying method may be a ventilation drying or a fluidized drying. The fluidized drying is preferred in order to enhance the homogeneity of the obtained electrode catalyst. Examples of a usable drier include a rotary evaporator, a spray drier, a slurry drier and a Loedige mixer.

The obtained mixed material is calcined under conditions where the second material can be converted to a carbonaceous material to yield an electrode catalyst. As for a calcining atmosphere, the mixed material is preferably calcined under an atmosphere free from oxygen in order to efficiently synthesize an electrode catalyst. In view of cost, the atmosphere free from oxygen is preferably a nitrogen atmosphere. When calcining the mixed material, a furnace can be used without a specific problem as long as the furnace can control an atmosphere. Examples thereof include a tubular electric furnace, a tunnel furnace, a far infrared ray furnace, a microwave heating furnace, a roller hearth furnace and a rotary furnace. A batch calcination or a continuous calcination may be carried out. The mixed material may be calcined in a still-standing style in which the mixed material is calcined in a state of the mixed material being stood, or the mixed powder may be calcined in a flowing style in which the mixed powder is calcined in a state of the mixed material being fluidized.

The calcining may be carried out at a temperature at which the carbonaceous material precursor can be converted to the carbonaceous material, that is, a temperature at which the carbonaceous material precursor is decomposed and carbonized, and the temperature may be suitably set depending on the types of the carbonaceous material precursors and calcining atmospheres. More specifically, the calcining temperature is, for example, from 400°C to 1100°C, preferably from 500°C to 1000°C, more preferably from 500°C to 900°C and still more preferably from 700°C to 900°C. The BET specific surface area of the electrode catalyst can be controlled by controlling the calcining temperature. The conditions where the second material can be converted to the carbonaceous material mean conditions where the second material can be decomposed and carbonized to be converted to the carbonaceous material.

A temperature rise rate while calcining is not particularly limited as long as it is in a practical range. The temperature rise rate is usually from 10°C/hour to 600°C/hour, and preferably from 50°C/hour to 500°C/hour, and the calcining may be carried out by, at that temperature rise rate, raising a temperature up to the calcining temperature and keeping the calcining temperature for 0.1 to 24 hours, and preferably for about 1 to about 12 hours.

It is preferable to be such situation that carbon remains in the electrode catalyst after calcining. The carbon content of the electrode catalyst is not less than 0.1% by mass and not more than 50% by mass, more preferably not less than 0.5% by mass and not more than 45% by mass, still more preferably not less than 3% by mass and not more than 40% by mass, and particularly preferably not less than 15% by mass and not more than 35% by mass. An igross value is used as the carbon content. Specifically, when the electrode catalyst, which is put in an alumina crucible, is calcined in an atmospheric pressure at 1000°C for 3 hours, a value of the carbon content determined by the following equation is used:

$$\texttt{carbon content (\% by mass)} = (W_I - W_A)/W_I \times 100$$

wherein $W_I$ is an electrode catalyst mass before calcining, and $W_A$ is an electrode catalyst mass after calcining.

The electrode catalyst obtained by the production method described above can show comparatively high activity without being dissolved in an acid electrolytic solution even at a high electric potential.

The electrode catalyst of the present invention is composed of: a metal compound comprising one or more metal elements selected from the group consisting of Groups 4A and 5A, and an oxygen atom; and a carbonaceous material covering at least part of the compound.

The BET specific surface area of the electrode catalyst is preferably not less than 15 $m^2/g$ and not more than 500 $m^2/g$, and more preferably not less than 50 $m^2/g$ and not more than $300 m^2/g$. The activity of the electrode catalyst can be further enhanced by setting the BET specific surface area to the range.

The carbon coverage of the electrode catalyst determined by the following equation (1) is preferably not less than 0.05 and not more than 0.5, and more preferably not less than 0.1 and not more than 0.3:

$$\texttt{carbon coverage = carbon content (\% by mass)/BET}$$

$$\texttt{specific surface area (m}^2\texttt{/g) (1).}$$

The work function value of the electrode catalyst is preferably low in order to promote an electrode reaction, preferably not less than 2 eV and not more than 6 eV, and more preferably not less than 3 eV and not more than 5 eV. An energy value in detecting a current, when measuring in a light amount measurement of 500 nW and a measurement energy of 4.2 to 6.2 eV using a photoelectron spectroscopy device "AC-2" manufactured by Riken Keiki Co., Ltd., can be used as the work function value.

As for the metal compound comprising one or more metal elements selected from the group consisting of Groups 4A and 5A, and an oxygen atom of the electrode catalyst, in view of the metal compound being stable in an acidic solution, the one or more metal elements selected from the group consisting of Groups 4A and 5A are preferably Ti, Zr, Ta or Nb, and more preferably Zr. The metal compound is more preferably zirconium dioxide.

The obtained electrode catalyst may be subjected to disintegration treatment. The disintegration may be carried out in a dry method or in a wet method. Examples of the dry disintegration method include a ball mill, a vibrating mill, a planetary mill, a pin mill and a jet mill. Examples of the wet disintegration method include an ultrasonic dispersing machine, a bead mill, a sand grinder, a homogenizer and a wet jet mill. In the wet disintegration, a dispersion medium to be used is not particularly specified, and alcohols such as methanol, ethanol, isopropanol and n-propanol, water such as ion exchanged water, and the like can be used. The BET specific surface area of the electrode catalyst can also be controlled by disintegration treatment.

The electrode catalyst composition of the present invention has the electrode catalyst above. The electrode catalyst composition usually has a dispersion medium. The electrode catalyst composition can be obtained by dispersing the electrode catalyst in the dispersion medium. Examples of the dispersion medium include alcohols such as methanol, ethanol, isopropanol and n-propanol, and water such as ion exchanged water. In the electrode catalyst composition, the mass of the dispersion medium is usually not less than about 1 part by mass and not more than about 100 parts by mass, and preferably not less than 2 parts by mass and not more than 50 parts by mass relative to 100 parts by mass of the electrode catalyst.

A dispersing agent may be used in dispersion. Examples of the dispersing agent include inorganic acids such as nitric acid, hydrochloric acid and sulfuric acid, organic acids such as oxalic acid, citric acid, acetic acid, malic acid and lactic acid, water-soluble zirconium salts such as zirconium oxychloride, surfactants such as ammonium polycarboxylate and sodium polycarboxylate, and catechins such as epicatechin, epigallocatechin and epigallocatechin gallate. In the electrode catalyst composition, the mass of the dispersing agent to be used is usually not less than about 0.01 parts by mass and not more than about 5 parts by mass, and preferably not less than 0.1 parts by mass and not more than 3 parts by mass relative to 100 parts by mass of the electrode catalyst.

The electrode catalyst composition may comprise an ion-exchange resin. An electrode catalyst composition comprising an ion-exchange resin is particularly suitable for a fuel cell. Examples of the ion-exchange resin include fluorinated ion-exchange resins such as Nafion (Dupont registered trade name), and hydrocarbon ion-exchange resins such as a sulufonated phenol formaldehyde resin. In the electrode catalyst composition, the mass of the ion-exchange resin to be used is usually not less than about 10 parts by mass and not more than about 200 parts by mass, and preferably not less than 20 parts by mass and not more than 100 parts by mass relative to 100 parts by mass of the electrode catalyst.

The electrode catalyst composition may comprise a conductive material. Examples of the conductive material include a carbon fiber, a carbon nanotube, a carbon nano-fiber, a conductive oxide, a conductive oxide fiber or a conductive resin. The electrode catalyst composition can also comprise noble metals such as Pt and Ru, and transition metals such as Ni, Fe and Co. When the electrode catalyst composition comprises the noble metals and the transition metals, the content ratio thereof is preferably a minute amount (for example, about 0.1 to about 10 parts by mass relative to 100 parts by mass of the electrode catalyst). In the electrode catalyst composition, the mass of the conductive material to be used is usually not less than about 1 part by mass and not more than about 70 parts by mass, and preferably not less than 5 parts by mass and not more than 50 parts by mass relative to 100 parts by mass of the electrode catalyst.

The electrode catalyst of the present invention can be used for an electrochemistry system, preferably used as an electrode catalyst for a fuel cell, more preferably used as an electrode catalyst for a solid polymer fuel cell, and still more preferably used as an electrode catalyst for a cathode part of a solid polymer fuel cell.

Since the electrode catalyst can be suitably used at an electric potential of not less than 0.4 V relative to a reversible hydrogen electrode potential in an acid electrolyte and has comparatively high activity, the electrode catalyst is useful as an oxygen reduction catalyst supported on an electrode and used for reducing oxygen in, for example, the electrochemistry system. As for the preferred upper limit of the electric potential when using as the oxygen reduction catalyst, about 1.6 V which is an electric potential at which oxygen is generated, depending on the stability of the electrode catalyst can be set. When the electric potential exceeds 1.6 V, the electrode catalyst may be gradually oxidized from the surface simultaneously with the generation of oxygen to be completely formed into an oxide, thereby, deactivating the electrode catalyst in some cases. When the electric potential is less than 0.4 V, the electrode catalyst can be said to be suitable in view of the stability of the electrode catalyst. However, the electrode catalyst may be less usability in view of the oxygen reduction catalyst in some cases.

The electrode catalyst composition of the present invention can be supported on electrodes such as carbon cross and carbon paper, and used for electrolysis of water, electrolysis of an organic matter or the like in an acid electrolyte. The electrode catalyst composition can be supported on an electrode constituting fuel cells such as a solid polymer fuel cell and a phosphoric-acid fuel cell, and used.

**Examples**

The present invention will be described in further detail by way of Examples below, but the present invention is not limited to these Examples.

Evaluation methods in each of Examples are as follows.

(1) A BET specific surface area ($m^2$/g) was determined by a nitrogen adsorption method.

(2) A crystal structure was determined using a powder X-ray diffraction device.

(3) As regards a carbon content, the obtained electrode catalyst was put in an alumina crucible, and was calcined in an air atmosphere in a box-type furnace at 1000°C for 3 hours. A value of a carbon content (igross value) determined by the following equation was used:

$$\texttt{carbon content (\% by mass)} = (W_I - W_A)/W_I \times 100$$

wherein $W_I$ is an electrode catalyst mass before calcining, and $W_A$ is an electrode catalyst mass after calcining.

(4) A carbon coverage was determined by the following equation:

$$\texttt{carbon coverage} = \texttt{carbon content (\% by mass)}/\texttt{BET}$$

$$\texttt{specific surface area (m}^2\texttt{/g).}$$

Example 1

[Preparation of Electrode Catalyst]

A commercially available zirconia powder (TZ-0, manufactured by Tosoh Corporation, BET value of 13.2 $m^2$/g) of 30 g and a commercially available PVA (Poval 117, manufactured by Kuraray Co., Ltd.) of 15 g were put in a bag made of polyethylene, and then homogeneously mixed to yield a mixed material. The obtained mixed material of 5 g was put into an alumina crucible. The mixed material was heated up to 800°C from room temperature (about 25°C) at a temperature rise rate of 150°C/hour in a tubular electric furnace having an inner volume of 5.6 L (manufactured by Motoyama Co., Ltd.) under nitrogen passing through the tubular electric furnace at a flow rate of 1.5 L/min, and then was kept at 800°C for 3 hours to yield an electrode catalyst. The obtained electrode catalyst was zirconium dioxide covered with carbon. This electrode catalyst had a BET specific surface area of 18.7 $m^2/g$, a carbon content of 2.6% by mass, a carbon coverage of 0.14, and a crystal structure of a monoclinic crystal.

[Use in Electrochemistry System]

The above obtained (in Example 1) electrode catalyst of 0.1 g was weighed, and then was mixed with a purified water of 5 mL. Thereafter, the mixture was mixed with a "Nafion (registered trade name)" solution [manufactured by Dupont, solid concentration of 5% by mass] of 0.5 mL. The obtained mixture was irradiated with an ultrasonic wave, and was stirred to yield a suspension. This suspension of 30 $\mu$L was applied onto a glassy carbon electrode [diameter of 5.2 mm, electrode area of 21 $mm^2$]. Thereafter, the suspension was dried in nitrogen flow, and was then heated at 120°C for 1 hour to yield a modified electrode with the electrode catalyst supported on the glassy carbon electrode. This modified electrode was immersed in a sulfuric acid aqueous solution having a concentration of 0.1 mol/L. An electric potential was cycled at 30°C by a scanning rate of 50 mV/s in a scanning range of 0.05 to 1.2 V relative to a reversible hydrogen electrode potential under atmospheric pressure, and under an oxygen atmosphere and under a nitrogen atmosphere, respectively. Current values in electric potentials per cycle were compared to confirm electrode stability. As a result, the fluctuation of the current values in the electric potentials per cycle in a scanning electric potential range was not recognized, and the current values were stable. A reversible hydrogen electrode in a sulfuric acid aqueous solution having the same concentration was used as a reference electrode. Current values in an electric potential of 0.4 V relative to the reversible hydrogen electrode potential under the oxygen atmosphere and under the nitrogen atmosphere were compared, and an oxygen reduction current was determined. As a result, the oxygen reduction current was 25 $\mu$A/$cm^2$ per the unit area of the electrode.

Example 2

[Preparation of Electrode Catalyst]

A commercially available zirconia powder (TZ-0, manufactured by Tosoh Corporation, BET value of 13.2 $m^2/g$) of 30 g, a commercially available PVA (Poval 117, manufactured by Kuraray Co., Ltd.) of 15 g and a purified water of 20 g were put in a bottle made of polyethylene, and then homogeneously mixed. The moisture of the mixture was removed at 50°C using a drier in order to remove the water to yield a mixed material. The obtained mixed material of 5 g was put into an alumina crucible. The mixed material was heated up to 800°C from room temperature (about 25°C) at a temperature rise rate of 150°C/hour in a tubular electric furnace having an inner volume of 5.6 L (manufactured by Motoyama Co., Ltd.) under nitrogen passing through the tubular electric furnace at a flow rate of 1.5 L/min, and then was kept at 800°C for 3 hours to yield an electrode catalyst. The obtained electrode catalyst was zirconium dioxide covered with carbon. This electrode catalyst had a BET specific surface area of 19.1 $m^2/g$, a carbon content of 4.5% by mass, a carbon coverage of 0.24, and a crystal structure of a monoclinic crystal.

[Use in Electrochemistry System]

A modified electrode was obtained in the same manner as in Example 1 except that the electrode catalyst obtained in Example 2 was used in place of the electrode catalyst obtained in Example 1. As a result, the fluctuation of current values in electric potentials per cycle in a scanning electric potential range was not recognized, and the current values were stable. Current values in an electric potential of 0.4 V relative to a reversible hydrogen electrode potential under an oxygen atmosphere and under a nitrogen atmosphere were compared, and an oxygen reduction current was determined. As a result, the oxygen reduction current was 170 $\mu$A/$cm^2$ per the unit area of the electrode.

Example 3

A commercially available zirconia powder (RC-100, manufactured by Daiichi Kigenso Kagaku Kogyo Co., Ltd., BET value of 106 $m^2/g$) of 5 g, a commercially available ascorbic acid (manufactured by Wako Pure Chemical Industries, Ltd.) of 2.5 g, and a purified water of 20 g were put in a plastic bottle, and then homogeneously mixed. The moisture of the mixture was removed at 70°C using a rotary evaporator in order to remove the water to yield a mixed material. The obtained mixed material of 0.5 g was put into an alumina crucible. The mixed material was heated up to 750°C from room temperature (about 25°C) at a temperature rise rate of 150°C/hour in a tubular electric furnace having an inner volume of 5.6 L (manufactured by Motoyama Co., Ltd.) under nitrogen passing through the tubular electric furnace at a flow rate of 1.5 L/min, and then was kept at 750°C for 1 hour to yield an electrode catalyst. The obtained electrode catalyst was zirconium dioxide covered with carbon. The electrode catalyst had a BET specific surface area of 127 $m^2/g$,

a carbon content of 13.7% by mass, a carbon coverage of 0.11, and a crystal structure of a monoclinic crystal.

[Use in Electrochemistry System]

The above obtained (in Example 3) electrode catalyst of 0.02 g was weighed, was mixed with a solution of a purified water of 5 mL and isopropyl alcohol of 5 mL, and then was irradiated with an ultrasonic wave to yield a suspension. This suspension of 20 μL was applied onto a glassy carbon electrode [diameter of 6.0 mm, electrode area of 28.3 mm$^2$], and then was dried. Thereafter, a "Nafion (registered trade name)" [manufactured by Dupont, 10-fold dilution sample of 5% by mass of solid concentration] of 13 μL was applied thereon, was dried, and was then placed in a vacuum dryer for 1 hour to yield a modified electrode with the electrode catalyst supported on the glassy carbon electrode. This modified electrode was immersed in a sulfuric acid aqueous solution having a concentration of 0.1 mol/L. An electric potential was cycled at room temperature by a scanning rate of 50 mV/s in a scanning range of -0.25 to 0.75 V relative to a silver-silver chloride electrode potential (in terms of reversible hydrogen electrode potential: 0.025 to 1.025 V) under atmospheric pressure, and under an oxygen atmosphere and under a nitrogen atmosphere, respectively. Current values in electric potentials per cycle were compared to confirm electrode stability. As a result, the fluctuation of the current values in the electric potentials per cycle in a scanning electric potential range was not recognized, and the current values were stable. A reversible hydrogen electrode in a sulfuric acid aqueous solution having the same concentration was used as a reference electrode. Current values in an electric potential of 0.4 V relative to the reversible hydrogen electrode potential under the oxygen atmosphere and under the nitrogen atmosphere were compared, and an oxygen reduction current was determined. As a result, the oxygen reduction current was 126 μA/cm$^2$ per the unit area of the electrode.

Example 4

A commercially available hydroxide zirconia powder (R-zirconium hydroxide, manufactured by Daiichi Kigenso Kagaku Kogyo Co., Ltd.) of 15.1 g, a commercially available ascorbic acid (manufactured by Wako Pure Chemical Industries, Ltd.) of 5 g, and a purified water of 20 g were put in a plastic bottle, and then homogeneously mixed. The moisture of the mixture was removed at 70°C using a rotary evaporator in order to remove the water to yield a mixed material. The obtained mixed material of 0.5 g was put into an alumina crucible. The mixed material was heated up to 750°C from room temperature (about 25°C) at a temperature rise rate of 150°C/hour in a tubular electric furnace having an inner volume of 5.6 L (manufactured by Motoyama Co., Ltd.) under nitrogen passing through the tubular electric furnace at a flow rate of 1.5 L/min, and then was kept at 750°C for 1 hour to yield an electrode catalyst. The obtained electrode catalyst was zirconium dioxide covered with carbon. This electrode catalyst had a BET specific surface area of 107 m$^2$/g, a carbon content of 28.3% by mass, a carbon coverage of 0.26, and a crystal structure of a tetragonal crystal.

[Use in Electrochemistry System]

A modified electrode was obtained in the same manner as in Example 3 except that the electrode catalyst obtained in Example 4 was used in place of the electrode catalyst obtained in Example 3. As a result, the fluctuation of current values in electric potentials per cycle in a scanning electric potential range was not recognized, and the current values were stable. Current values in an electric potential of 0.4 V relative to a reversible hydrogen electrode potential under an oxygen atmosphere and under a nitrogen atmosphere were compared, and an oxygen reduction current was determined. As a result, the oxygen reduction current was 1060 μA/cm$^2$ per the unit area of the electrode.

Comparative Example 1

[Use in Electrochemistry System]

A modified electrode was obtained in the same manner as in Example 1 except that a commercially available zirconia powder (TZ-0, manufactured by Tosoh Corporation, carbon content of 0%, BET specific surface area of 13.2 m$^2$/g, carbon coverage of 0) was used in place of the electrode catalyst obtained in Example 1. As a result, the fluctuation of current values in electric potentials per cycle in a scanning electric potential range was not recognized, and the current values were stable. Current values in an electric potential of 0.4 V relative to a reversible hydrogen electrode potential under an oxygen atmosphere and under a nitrogen atmosphere were compared, and an oxygen reduction current was determined. As a result, the oxygen reduction current was not observed.

Comparative Example 2

[Use in Electrochemistry System]

A modified electrode was obtained in the same manner as in Example 3 except that a commercially available zirconia powder (RC-100, manufactured by Daiichi Kigenso Kagaku Kogyo Co., Ltd., carbon content of 0%, BET specific surface area of 106 $m^2$/g, carbon coverage of 0) was used in place of the electrode catalyst obtained in Example 3. As a result, the fluctuation of current values in electric potentials per cycle in a scanning electric potential range was not recognized, and the current values were stable. Current values in an electric potential of 0.4 V relative to a reversible hydrogen electrode potential under an oxygen atmosphere and under a nitrogen atmosphere were compared, and an oxygen reduction current was determined. As a result, the oxygen reduction current was 1.5 $\mu$A/$cm^2$ per the unit area of the electrode.

**Industrial Applicability**

The present invention can provide an electrode catalyst showing comparatively high activity without being dissolved in an acid electrolyte even at a high electric potential.

**Claims**

1. A method for producing an electrode catalyst, the method comprising calcining a mixed material comprising a first material provided below and a second material provided below under conditions where the second material can be converted to a carbonaceous material:

   the first material that is a metal compound composed of one or more metal elements selected from the group consisting of Groups 4A and 5A, and one or more non-metal elements selected from the group consisting of a hydrogen atom, a nitrogen atom, a chlorine atom, a carbon atom, a boron atom and an oxygen atom;
   the second material that is a carbonaceous material precursor.

2. The method according to claim 1, the method comprising calcining a mixed material comprising a first material provided below and a second material provided below under conditions where the second material can be converted to a carbonaceous material:

   the first material that is a metal compound composed of a metal element of Group 4A or 5A, and a non-metal element selected from the group consisting of a nitrogen atom, a carbon atom, a boron atom and an oxygen atom;
   the second material that is a carbonaceous material precursor.

3. The method according to claim 1 or 2, wherein the mixed material is obtained by wet mixing the first material with the second material.

4. The method according to claim 1 or 2, wherein the second material is a water-soluble one.

5. The method according to claim 1 or 2, wherein the metal element in the first material is Zr.

6. The method according to claim 5, wherein the first material is a metal compound selected from the group consisting of zirconium dioxide, zirconium hydroxide and zirconium oxychloride.

7. The method according to claim 1 or 2, wherein the mixed material is calcined under an atmosphere free from oxygen.

8. An electrode catalyst obtained by the method according to any one of claims 1 to 7.

9. An electrode catalyst composed of:

   a metal compound comprising one or more metal elements selected from the group consisting of Groups 4A and 5A, and an oxygen atom; and
   a carbonaceous material covering at least part of the compound, wherein
   the electrode catalyst has a BET specific surface area of not less than 15 $m^2$/g and not more than 500 $m^2$/g

and a carbon coverage of not less than 0.05 and not more than 0.5 as determined by the following equation (1):

$$\text{carbon coverage} = \text{carbon content (\% by mass)}/\text{BET}$$

$$\text{specific surface area (m}^2/\text{g) (1).}$$

10. The electrode catalyst according to claim 9, wherein the one or more metal elements selected from the group consisting of Groups 4A and 5A are Zr.

11. The electrode catalyst according to claim 9 or 10, wherein the metal compound comprising one or more metal elements selected from the group consisting of Groups 4A and 5A and an oxygen atom is zirconium dioxide.

12. An electrode catalyst composition comprising the electrode catalyst according to any one of claims 8 to 11.

<table>
<tr><td colspan="2" align="center">**INTERNATIONAL SEARCH REPORT**</td><td colspan="2">International application No.<br>PCT/JP2009/053464</td></tr>
</table>

| A. CLASSIFICATION OF SUBJECT MATTER |
|---|
| $B01J21/18$(2006.01)i, $H01M4/88$(2006.01)n, $H01M4/90$(2006.01)n |

According to International Patent Classification (IPC) or to both national classification and IPC

| B. FIELDS SEARCHED |
|---|
| Minimum documentation searched (classification system followed by classification symbols)<br>B01J21/18, H01M4/88, H01M4/90 |

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2007-257888 A (Allied Material Corp.),<br>04 October, 2007 (04.10.07),<br>Claims 1 to 9; examples<br>(Family: none) | 8,12<br>1-7,9-11 |
| X<br>A | JP 2003-317726 A (Nissan Motor Co., Ltd.),<br>07 November, 2003 (07.11.03),<br>Claims 1 to 10; Par. Nos. [0002], [0017],<br>[0031]<br>(Family: none) | 8,12<br>1-7,9-11 |
| A | JP 2007-270316 A (Central Research Institute<br>of Electric Power Industry),<br>18 October, 2007 (18.10.07),<br>Claims 1 to 5; Par. No. [0027]<br>(Family: none) | 1-12 |

☐ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>21 May, 2009 (21.05.09) | Date of mailing of the international search report<br>02 June, 2009 (02.06.09) |
|---|---|
| Name and mailing address of the ISA/<br>Japanese Patent Office | Authorized officer |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Hiroshi Yoneyama et al.** *Electrochemistry,* 1973, vol. 41, 719

- **Yan Liu et al.** *Electrochemical and Solid-State Letters,* 2005, vol. 8 (8), A400-402